Europäisches Patentamt

European Patent Office

Office européen des brevets

(19)

(11) Publication number: **0 326 393 B1**

## EUROPEAN PATENT SPECIFICATION

(12)

(45) Date of publication of patent specification:
**16.10.91 Bulletin 91/42**

(51) Int. Cl.⁵: **B65H 20/20, B41J 11/30, G06K 15/16**

(21) Application number: **89300777.3**

(22) Date of filing: **27.01.89**

(54) Paper feed mechanism.

(30) Priority: **29.01.88 JP 16888/88**

(43) Date of publication of application:
**02.08.89 Bulletin 89/31**

(45) Publication of the grant of the patent:
**16.10.91 Bulletin 91/42**

(84) Designated Contracting States:
**DE FR GB**

(56) References cited:
**DE-A- 2 125 008**
**DE-A- 3 634 033**
**US-A- 3 938 721**

(73) Proprietor: **Oki Electric Industry Company, Limited**
**7-12, Toranomon 1-chome Minato-ku Tokyo 105 (JP)**

(72) Inventor: **Mizutani, Minoru c/o Oki Electric Industry Co. Ltd**
**7-12 Toranomon 1-chome Minatoku Tokyo (JP)**

(74) Representative: **Read, Matthew Charles et al Venner Shipley & Co. 368 City Road London EC1V 2QA (GB)**

EP 0 326 393 B1

## Description

The present invention relates to a paper feed mechanism having particular but not exclusive application to a printer for feeding paper to be printed.

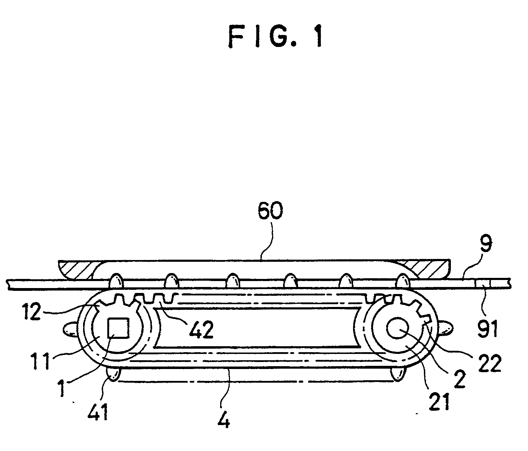

An example of a prior-art feed mechanism for a printer or the like for feeding printing paper at a predetermined speed, is a pin-tractor type mechanism shown in Fig. 1. This comprises a toothed drive pulley 11, a toothed driven pulley 21, and a belt 4 strung between the pulleys, which has interior transverse grooves 42 that meshingly engage with the toothed pulleys 11, 22 such that rotation of the drive pulley 11 by drive shaft 1 causes rotation of the feed belt 4 in a predetermined direction. The driven pulley 21 is fitted on a support shaft 2, and holds the feed belt 4 in tension. Drive pins 41 are provided at a predetermined interval on the outer surface of the feed belt 4. The pins 41 are engaged with perforations 91 formed in line along edges of printing paper 9 typically consisting of several laminated sheets. The paper 9 is therefore fed in the same direction as and in synchronism with the rotation of the feed belt 4.

A pressure plate 60 is provided over the paper 9 to ensure the engagement of the pins 41 with the perforations 91, i.e., to prevent disengagement of the pins 41 from the perforations 91 due for example to warping of the paper 9. By virtue of the pressure plate 60, the paper 9 is pressed on the feed belt 4 whilst being fed by the mechanism.

Examples of pin-tractor type mechanisms are disclosed in US-A-3938721 and DE-A-3634033.

In the pin-tractor type feed mechanism described above, when the paper 9 is fed in synchronism with the rotation of the feed belt 4, a frictional force is created between the top surface of the paper and the pressure plate 60. The friction applies a reactive force on the top surface of the paper 9 in the direction opposite to the direction of feeding. When the speed of the feeding by the feed belt 4 is increased, the frictional force also is increased. Where a plurality of sheets of the paper 9 are fed in stack, the top sheet of the paper 9 may have its perforations 91 disengaged from the pins 41, and may become incapable of being fed, and damage to the perforations and faint printing may occur.

Reference is now directed to DE-A-2125008 which discloses a paper drive mechanism in which the pressure plate is replaced by an endless member in the form of a rotary belt that is arranged in meshing engagement with the drive pins, so as to reduce friction between the mechanism and the driven paper.

The present invention is characterised by features which facilitate reliable loading of the paper onto the drive pins, for a mechanism which utilises such an endless member in meshing engagement with the drive pins. More particularly, the present invention is characterised by a pressure plate for pressing the paper against the drive pins at a position upstream in the paper drive direction from the endless member, the pressure plate being movable away from its pressing position to permit the paper perforations to be set onto the pins.

In order that the invention may be more fully understood an embodiment thereof will be described with reference to the accompanying drawings wherein.

Fig. 1 is a schematic side view of a prior-art paper feed mechanism.

Fig. 2 is an oblique view of a paper feed mechanism according to the invention.

Fig. 3 is an exploded view of the paper feed mechanism according to the invention, shown in Fig. 2,

Fig. 4 is an oblique view of the pressure plate on the downstream side,

Fig. 5 is a schematic side view thereof, and

Fig. 6 is an enlarged view of part X in Fig. 5.

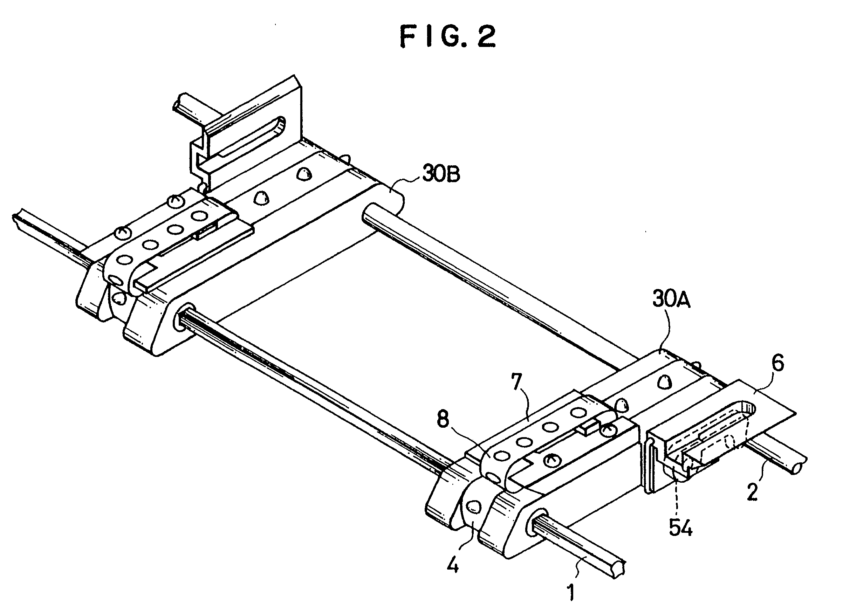

In the following description of Figures 2 to 6, parts and members identical or similar to those in the prior art shown in Fig. 1 are given the same reference marks and their explanation is omitted.

Fig. 2 is an oblique view of a paper feed mechanism according to the invention. A pair of pin-tractors 30A and 30B span across a drive shaft 1 and a support shaft 2. The pin tractors 30A and 30B are formed to be identical and are symmetrically disposed about an axis midway between them. To simplify the description, the following explanation is made only in connection with the one of the pin tractors, 30A, the tractor 30B being of a corresponding construction.

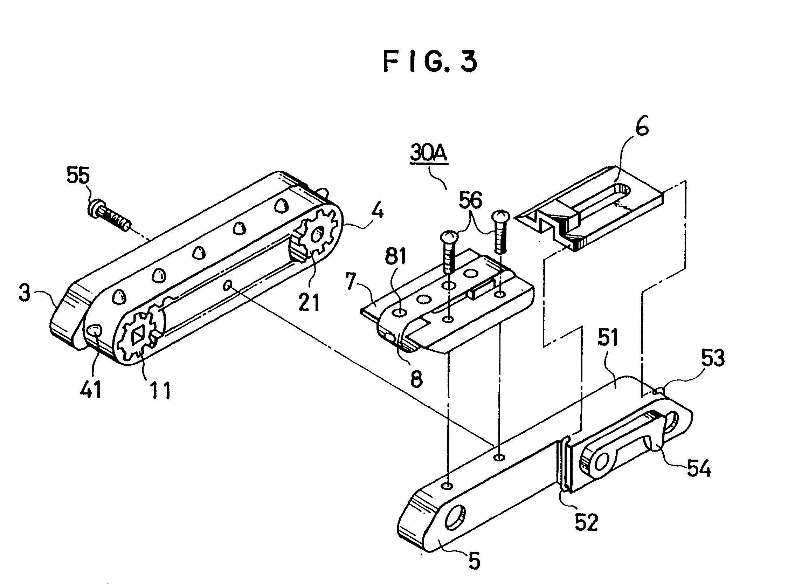

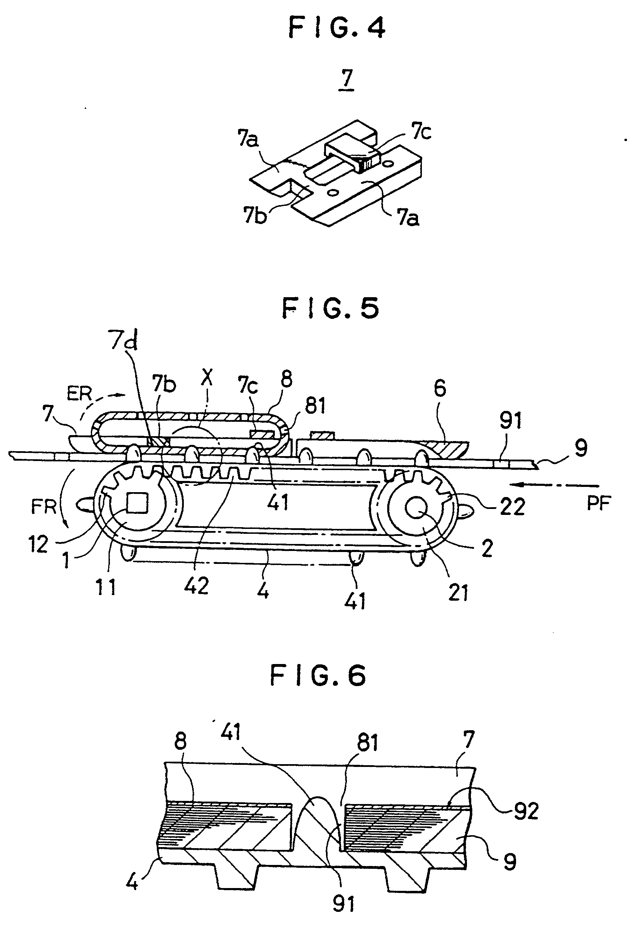

Fig. 3 is an exploded oblique view of the pin tractor 30A. The side frames 3 and 5 extend parallel with each other and are fixed by means of a bolt 55 to each other. A drive pulley 11 and a driven pulley 21 are fixed to the aide frame 3 with a predetermined separation between them and are disposed between the side frames 3 and 5. A feed belt 4 is strung between these pulleys. As shown in the side schematic view of Fig. 5, teeth 12 which project from the outer surface of the drive pulley 11 and teeth 22 which project from the outer surface of the driven pulley 21, are engaged with grooves 42 formed on the inner surface of the feed belt 4 to extend in the width direction of the feed belt 4 and disposed at an interval corresponding to the pitch of the teeth 12 and 22 on the pulleys 11 and 21. The drive pulley 11 is mounted on the drive shaft 1, and the feed belt 4 is rotated by means of a drive source, not shown, in a predetermined direction indicated by arrow FR.

The driven pulley 21 is slidably mounted on the support shaft 2 and supports the feed belt 4 while applying a certain, predetermined tension on the feed belt 4.

Pins 41 project from the outer surface of the feed belt 4. The pins 41 have a diameter slightly smaller than perforations 91 of the paper 9 which will be described later. The interval of the pins 41 is identical to the pitch of the perforations 91 of the paper 9.

A pair of pressure plates 6 and 7 are provided above the upper surface 51 of the side frame 5. The pressure plate 6 is on the upstream side (the side from which the paper 9 is fed) and the pressure plate 7 is on the downstream side (the side toward which the paper 9 is fed). The pressure plate 6 on the upstream side is mounted to the side frame 5 by means of a spring 52 and a pin 53 such that it can be opened outward (away from the opposite pin tractor 30B) to permit setting of the front end of the paper 9 on the side frames 3 and 5 and feed belt 4. The pressure plate 7 on the downstream side is fixed by means of screws 56 to the upper surface 51 of the side frame 5.

An endless film 8 which is rotated with the feed belt 4 is provided in the centre of the pressure plate 7.

The pressure plate 7 is shown in Fig. 4 with the endless film removed. As illustrated the pressure plate 7 is formed of two skids 7a parallel to each other, a spanning part 7b interconnecting the skids 7a and a bridge part 7c also connecting the two skids 7a to each other. The lower surface 7d (best seen in Fig. 5) of the spanning part 7b serves to provide a reactive pressing force to the endless film 8.

The endless film 8 is preferably made of synthetic resin, such as polyester or polyimide. The thickness of the endless film 8 should for example be 0.2 mm to 0.5 mm when the length of the endless film is about 20 cm. The endless film 8 should preferably exhibit a low coefficient of friction in relation to pressure plate 7. A plurality of perforations 81 are provided along the length of the endless film. The perforations 81 have a diameter a little larger than the pins 41 and are provided at an interval substantially identical to the pitch of the pins 41. Moreover, the pins 41 on the feed belt 4 are long enough so that their tips can project from the top surface of the paper 9, at least when the paper 9 consisting of stacked sheets, is compressed. Accordingly, the perforations 81 of the endless film 8 are engaged with the pins 41 of the feed belt 4. The engagement of the pins 41 with the perforations 81 pulls the endless film 8 in the direction of rotation of the feed belt 4 and also "guides" the endless film 8 to prevent the endless film 8 from deviating laterally. The endless film 8 should have a certain stiffness so that it can apply pressure in the downward direction on the paper 9 and, at the downstream end of the feed belt 4 where the feed belt 4 is curved downward along the drive pulley 11, the perforations 81 in the endless film 8 are automatically released from the pins 41 on the feed belt 4.

When the feed belt 4 is rotated by the drive pulley 11 in the direction of the arrow FR in Fig. 5, the endless film 8 is rotated in synchronism therewith, in the direction of the arrow FR.

Now, reference will be made of the situation where a plurality of sheets of paper are fed by means of the described paper feed mechanism. Typically the number of sheets of the paper in stack is 5 to 12, and the thickness of the stack of the sheets is 0.9 mm and 1.8 mm in free state, while it is 0.3 mm to 0.6 mm when compressed. The gap between the endless film 8 and the feed belt 4 is set at 0.6 mm to 1.0 mm.

First, the lock lever 54 is released as shown in Fig. 2, and either of the pin tractors 30A and 30B is slid along the support shaft 2, and positioned so that the separation between the tractors 30A and 30B corresponds to the desired width of the paper, i.e., the dimension between the side edges of the paper, and the lock lever 54 is then fixed. Then, the pressure plate 6 on the upstream side is opened outward, and the paper 9 is set so that its front part is placed on the upstream side of the upper surface 51 of the side frames 3 and 5, and the feed belt 4 that are now exposed because of the pressure plate 6 being open, and the perforations 91 of the paper 9 are engaged with the pins 41 on the feed belt 4. The pressure plate 6 is then closed, and the drive shaft 1 is rotated by the drive source, not shown. Then, as shown in Fig. 5, the feed belt 4 is rotated in the direction of the arrow FR, the paper 9 is fed in the direction of the arrow PF, and enters beneath the lower surface of the pressure plate 7 on the downstream side. At the pressure plate 7 on the downstream side, the perforations 81 of the endless film 8 are sequentially engaged with the pins 41 that are also engaged with the perforations 91 of the paper, and protrude from the perforations 91 of the paper 9. That is, as is more clearly illustrated in Fig. 6, which is an enlarged view of the part X in Fig. 5, the endless film 8 passes between the top surface 92 of the paper 9 and the pressure plate 7, and the endless film 8 is in contact with the top surface 92 of the paper 9. Since the film 8 is rotated in synchronism with the feed belt 4, as described above, substantially no frictional force is created between the top surface 92 of the paper and the endless film 8. Accordingly, the top surface 92 of the paper 9 is pressed downward by the endless film 8 (as a reaction to the upward pressure from the paper 9) and the perforations 91 at the top surface 92 will not be disengaged from the pins 41 during rotation, so the paper 9 is smoothly fed out. Although friction occurs between the endless film 8 and the pressure plate 7, the frictional force is low because the coefficient of friction of the endless film 8 is low, and the endless film can be made sufficiently strong to withstand the friction. In the above embodiment, the endless film is made of synthetic resin. Alternatively, the endless film may be formed of a thin metal film or other materials.

As has been described, in the paper feed mechanism according to the invention, an endless film which is pulled by the pins on the feed belt so as to be rotated in the same direction as and in synchronism with the feed belt is provided to rotate around the pressure plate. Because the top surface of the paper is pressed by the endless film and no frictional force is applied on the top surface of the paper, the perforations of the paper will not be disengaged from the pins on the feed belt and a plurality of sheets of the paper can be fed securely. Damage to the perforations of the paper and faint printing will not occur. Moreover, the mechanism can meet the demand for higher printing speed.

## Claims

1. A paper feed mechanism for paper having perforations disposed at a regular pitch along the direction in which the paper is to be fed, comprising a plurality of drive pins (41) for engaging the perforations on one side of the paper, drive means (4, 11, 21) for moving the pins engaged with the perforations such as to drive the paper in the feed direction, and support means (6, 7, 8) for supporting the paper on the opposite side thereof to the drive means (4, 11, 21) the support means including an endless member (8) for contacting said opposite side of the paper in meshing engagement with the pins (41) so as to be rotated in synchronism with the driving movement thereof, and characterised in that the support means includes a pressure plate (6) for pressing the paper against the pins at a position upstream in said feed direction from said endless member (8), said pressure plate (6) being movable away from its pressing position to permit the paper perforations to be set onto the pins.

2. A mechanism according to claim 1 wherein the drive means includes a drive pulley (11) mounted for rotation about a first axis, a driven pulley (22) which is mounted for rotation about a second axis parallel to said first axis and a feed belt (4) strung between the pulleys (11, 22) the drive pins (41) projecting from the outer surface of the belt (4).

3. A mechanism according to claim 2, wherein said endless member (8) has perforations (81) disposed in a line extending along its length at a pitch corresponding to the pitch of the pins (41) of the feed belt (4) ; said pins (41) of the feed belt extending in use through the perforations (91) of the paper with tips of the pins (41) engaging the perforations of the said endless member (8).

4. A mechanism according to claim 3, wherein the endless member (8) is a belt which is sufficiently stifft that at the downstream end of the feed belt (4) where the feed belt is curved around one of said pulleys (11, 22), the perforations (81) of the endless member (8) are automatically disengaged from the pins (41) of the feed belt (4).

5. A mechanism according to claim 2, 3 or 4, wherein said endless member (8) comprises a film disposed to rotate around a further pressure plate (7) without pulleys.

6. A mechanism according to 5 wherein said further pressure plate (7) has a part (7b) contacting the endless film (8) to apply pressure thereon for application to the paper.

7. A mechanism according to claim 5 or 6, further comprising a side frame (5), said drive pulley (11) and said driven pulley (22) being mounted on said side frame, (5) and said pressure plates (6, 7) being fixed to said side frame.

8. A mechanism according to claim 7, wherein said upstream pressure plate (6) is mounted on the side frame (5) by means of a spring (52) and a pin (53) such that the plate (6) can be opended outward.

9. A mechanism according to claim 7 or 8 wherein said further pressure plate (7) is fixed to the side frame (5) by means of screws (56).

10. A mechanism according to any one of claims 2, 3, 4 or 5, wherein said endless member (8) is substantially always engaged with the feed belt (4).

## Patentansprüche

1. Papiervorschubmechanismus für Papier mit in einem regelmäßigen Abstand entlang der Richtung, in der das Papier transportiert werden soll, angeordneten Perforationen, der eine Vielzahl von Antriebsstiften (41) zum Eingriff mit den Perforationen auf einer Seite des Papiers, eine Antriebseinrichtung (4, 11, 21) zum Bewegen der im Eingriff mit den Perforationen befindlichen Stifte, um das Papier in Vorschubrichtung zu transportieren, und eine Halteeinrichtung (6, 7, 8) zum Halten des Papiers auf der gegenüberliegenden Seite an der Antriebseinrichtung (4, 11, 21) aufweist, wobei die Halteeinrichtung ein endloses Teil (8) zum Kontaktieren der gegenüberliegenden Seite des Papiers im Eingriff mit den Stiften (41) aufweist, um im Gleichlauf mit deren Antriebsbewegung gedreht zu werden, und der dadurch gekennzeichnet ist, daß die Halteeinrichtung eine Druckplatte (6) zum Anpressen des Papiers an die Stifte an einer Position umfaßt, die in Vorschubrichtung gesehen stromaufwärts vom endlosen Teil (8) gelegen ist, wobei die Druckplatte (6) von ihrer Anpreß-Position wegbewegt werden kann, um das Aufsetzen der Papierperforation auf die Stifte zu ermöglichen.

2. Mechanismus nach Anspruch 1, worin die Antriebseinrichtung eine um eine erste Achse drehbare Antriebsscheibe (11), eine um eine zweite Achse, die parallel zu der ersten Achse verläuft, drehbare angetriebene Scheibe (22) und einen zwischen den Scheiben (11, 22) gespannten Vorschubriemen (4) aufweist, wobei die Antriebsstifte (41) von der äußeren Oberfläche des Riemens (4) hervorstehen.

3. Mechanismus nach Anspruch 2, worin das endlose Teil (8) Perforationen (81) hat, die in einer Linie, die sich entlang seiner Länge erstreckt, in einem dem Abstand der Stifte (41) des Vorschubriemens (4) entsprechenden Abstand angeordnet sind, wobei die Stifte (41) des Vorschubriemens sich während des Betriebes durch die Perforationen (91) des Papiers hindurcherstrecken, wobei sich die Spitzen der Stifte (41) mit den Perforationen des endlosen Teils (8) in Eingriff befinden.

4. Mechanismus nach Anspruch 3, worin das endlose Teil (8) ein Riemen ist, der ausreichend steif ist, so daß am stromabwärts gelegenen Ende des Vorschubriemens (4), wo der Vorschubriemen um eine der Scheiben (11, 22) herumgewölbt ist, die Perforationen (81) des endlosen Teils (8) automatisch von den Stiften (41) des Vorschubriemens (4) gelöst werden.

5. Mechanismus nach Anspruch 2, 3 oder 4, worin das endlose Teil (8) einen Film aufweist, der so angeordnet ist, daß er sich ohne Scheiben um eine weitere Druckplatte (7) dreht.

6. Mechanismus nach Anspruch 5, worin die weitere Druckplatte (7) ein Teil (7b) hat, das mit dem endlosen Film (8) in Kontakt steht, um Druck darauf auszuüben zur Anwendung auf das Papier.

7. Mechanismus nach Anspruch 5 oder 6, der weiterhin einen seitlichen Rahmen (5) aufweist, wobei die Antriebsscheibe (11) und die angetriebene Scheibe (22) an dem seitlichen Rahmen (5) montiert sind und die Druckplatten (6, 7) an dem seitlichen Rahmen befestigt sind.

8. Mechanismus nach Anspruch 7, worin die stromaufwärts gelegene Druckplatte (6) durch eine Feder (52) und einen Stift (53) so an dem seitlichen Rahmen (5) montiert ist, daß die Platte (6) nach außen geöffnet werden kann.

9. Mechanismus nach Anspruch 7 oder 8, worin die weitere Druckplatte (7) durch Schrauben (56) an dem seitlichen Rahmen (5) befestigt ist.

10. Mechanismus nach einem der Ansprüche 2, 3, 4 oder 5, worin das endlose Teil (8) im wesentlichen immer mit dem Vorschubriemen (4) im Eingriff steht.

## Revendications

1. Mécanisme d'avance du papier pour du papier ayant des perforations disposées avec un pas régulier le long de la direction dans laquelle le papier doit être avancé, comportant plusieurs picots d'entraînement (41) destinés à engager les perforations sur un côté du papier, des moyens d'entraînement (4, 11, 21) destinés à déplacer les picots engagés dans les perforations de façon à entraîner le papier dans la direction d'avance, et des moyens de support (6, 7, 8) destinés à supporter le papier sur le côté de celui-ci opposé aux moyens d'entraînement (4, 11, 21), les moyens de support comprenant un élément sans fin (8) destiné à entrer en contact avec le dit côté opposé du papier en prise avec les picots (41) de façon à être entraîné en rotation en synchronisme avec le mouvement d'entraînement de ceux-ci, et caractérisé en ce que les moyens de support comportent une plaque de pression (6) destinée à presser le papier contre les picots dans une position en amont dans la dite direction d'avance par rapport au dit élément sans fin (8), la dite plaque de pression (6) étant mobile à l'écart de sa position de pression afin de permettre aux perforations du papier d'être mises en place sur les picots.

2. Mécanisme selon la revendication 1, dans lequel les moyens d'entraînement comportent une poulie d'entraînement (11) montée de façon tourner sur un premier axe, une poulie entraînée (22) qui est montée de façon à tourner sur un deuxième axe parallèle au dit premier axe et une courroie d'avance (4) tendue entre les poulies (11, 22), les picots d'entraînement (41) se projetant depuis la surface extérieure de la courroie d'avance (4).

3. Mécanisme selon la revendication 2, dans lequel le dit élément sans fin (8) possède des perforations (81) disposées en ligne s'étendant sur sa longueur à un pas correspondant au pas des picots (41) de la courroie d'avance (4), les dits picots (41) de la courroie d'avance s'étendant lors de l'utilisation à travers les perforations (91) du papier avec les pointes des picots (41) engageant les perforations du dit élément sans fin (8).

4. Mécanisme selon la revendication 3, dans lequel l'élément sans fin (8) est une courroie qui est suffisamment rigide pour que, à l'extrémité aval de la courroie d'avance (4) où la courroie d'avance est recourbée autour de l'une des dites poulies (11, 22), les perforations (81) de l'élément sans fin (8) sont automatiquement dégagées des picots (41) de la courroie d'avance (4).

5. Mécanisme selon la revendication 2, 3 ou 4, dans lequel le dit élément sans fin (8) comporte un film disposé de façon à tourner autour d'une autre plaque de pression (7) sans poulies.

6. Mécanisme selon la revendication 5, dans lequel la dite autre plaque de pression (7) possède une partie (7b) en contact avec le film sans fin (8) de façon à appliquer dessus de la pression pour application sur le papier.

7. Mécanisme selon la revendication 5 ou 6, comportant en outre un cadre latéral (5), la dite poulie d'entraînement (11) et la dite poulie entraînée (22) étant montées sur le dit cadre latéral (5), et les dites plaques de pression (6, 7) étant fixées au dit cadre latéral.

8. Mécanisme selon la revendication 7, dans lequel la dite plaque de pression (6) en amont est montée sur le cadre latéral (5) au moyen d'un ressort (52) et d'un axe (53) de telle sorte que la plaque (6) peut être ouverte vers l'extérieur.

9. Mécanisme selon la revendication 7 ou 8, dans lequel la dite autre plaque de pression (7) est fixée au cadre latéral (5) au moyen de vis (56).

10. Mécanisme selon l'une quelconque des revendications 2, 3, 4 ou 5, dans lequel le dit élément sans fin (8) est sensiblement toujours engagé avec la courroie d'avance (4).

# FIG. 1

# FIG. 2

F I G. 3

EP 0 326 393 B1

# FIG. 4

<u>7</u>

# FIG. 5

# FIG. 6